# EUROPEAN PATENT SPECIFICATION

(11) **EP 3 249 398 B1**
(45) Date of publication and mention of the grant of the patent: **09.01.2019**
(21) Application number: 17000861.9
(22) Date of filing: 19.05.2017
(51) Int. Cl.: G01N 31/10

(54) **SYSTEM FOR LIGHTING AND MEASURING THE PHOTO-CATALYTIC ACTIVITY OF THE REACTIVE SURFACE OF A MATERIAL**
SYSTEM ZUR BELEUCHTUNG UND MESSUNG DER PHOTOKATALYTISCHEN AKTIVITÄT DER REAKTIVEN OBERFLÄCHE EINES MATERIALS
SYSTÈME POUR ÉCLAIRER ET MESURER L'ACTIVITÉ PHOTOCATALYTIQUE DE LA SURFACE RÉACTIVE D'UN MATÉRIAU

(30) Priority: 24.05.2016 IT UA20163762
(43) Date of publication of application: 29.11.2017
(73) Proprietor: Maurino, Valter, 10064 Pinerolo (TO) (IT); Minero, Claudio, 12035 Racconigi (CN) (IT); Fonderia Mestieri S.r.l., 10093 Collegno (TO) (IT)
(72) Inventor: Maurino, Valter, I-10062 Pinerolo (TO) (IT); Minero, Claudio, I-12035 Racconigi (CN) (IT); Pellegrino, Francesco, I-10093 Collegno (TO) (IT); Zangirolami, Marco, I-10093 Collegno (TO) (IT)
(74) Representative: Garavelli, Paolo

(56) References cited:
- JP-A- 2005 274 477
- JP-A- 2007 298 328
- US-A1- 2002 172 627
- XIAOLI MA ET AL: "Experimental investigation of a side-emitting optical fibre mop fan for air cleaning", INTERNATIONAL JOURNAL OF LOW-CARBON TECHNOLOGIES, vol. 3, no. 2, 2008, pages 126-136, XP055339315, GB ISSN: 1748-1317
- MANUEL NUÑO ET AL: "Study of solid/gas phase photocatalytic reactions by electron ionization mass spectrometry", JOURNAL OF MASS SPECTROMETRY., vol. 49, no. 8, 8 August 2014 (2014-08-08) , pages 716-726, XP055339433, GB ISSN: 1076-5174, DOI: 10.1002/jms.3396

## Description

The present invention refers to a system for lighting and measuring the photo-catalytic activity of the reactive surface of a material.

In general, the present invention refers to measuring methods and systems, material survey and analysis tests, by determining their chemical and physical properties.

In particular, the present invention refers to surveys or analyses of non-biologic materials through chemical methods based of the use of photo-catalysts.

The prior art is given by patent EP2282203B1 dealing with a method for measuring the photo-catalytic activity of cement materials containing photo-catalysts, namely the measure of the electromotive force generated between due electrodes placed in contact respectively with a lighted area and a darkened area of the material. The method allows checking the photo-catalytic efficiency of newly produced materials, as well as already laid materials.

The method of such patent EP2282203B1 does not deal with the problem of being able to use an easily transportable instrumentation to easily perform the measures. However, the advice to solve the problem can be give by the field of UV irradiation devices, units which make UV light-emitting diodes, LED, photo-catalysts and specific compounds during water treatments.

In fact, the state of the art is given by patent application US20020172627A1, dealing with a system for decomposing obnoxious substances by using a photo-catalyst, comprising the passage of a flow of fluid containing obnoxious substances, a rotor having a photo-catalyst fastened onto its surface and installed in such flow passage in a rotating status, and photo-radiating means to radiate the photo-catalyst light. The photo-catalyst fastened onto the rotor when rotating is activated by the photo-radiating means to be able to decompose the obnoxious substances in the liquid, while the fluid is agitated by the rotation of the rotor.

A further example of the state of the art is given by patent US5865959A, dealing with lighting of the rear side of a UV transparent support to strongly reduce the decomposition of organic pollutants in carbon dioxide, by strongly increasing the amount of radiation available for the catalysis of organic pollutants from a photo-catalytic semiconductor. The UV light illuminates the UV transparent means in order to generate a UV light propagation through the means by lighting the rear side of a photo-catalytic semiconductor coating on the front side. The photo-catalytic semiconductor dissociates water on its surface to form hydroxyl radicals, which in turn oxidize the organic pollutants.

Therefore, object of the present invention is solving the above prior art problems by providing a system for lighting and measuring the photo-catalytic activity of the reactive surface of a material, which has substantially reduced sizes to guarantee handiness and readiness in defining the measure.

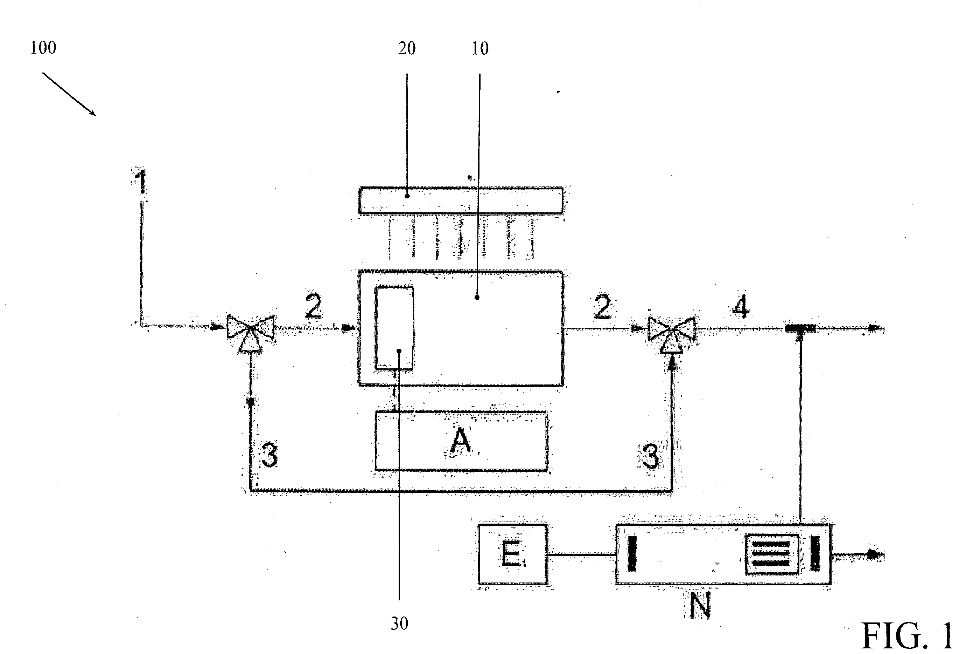

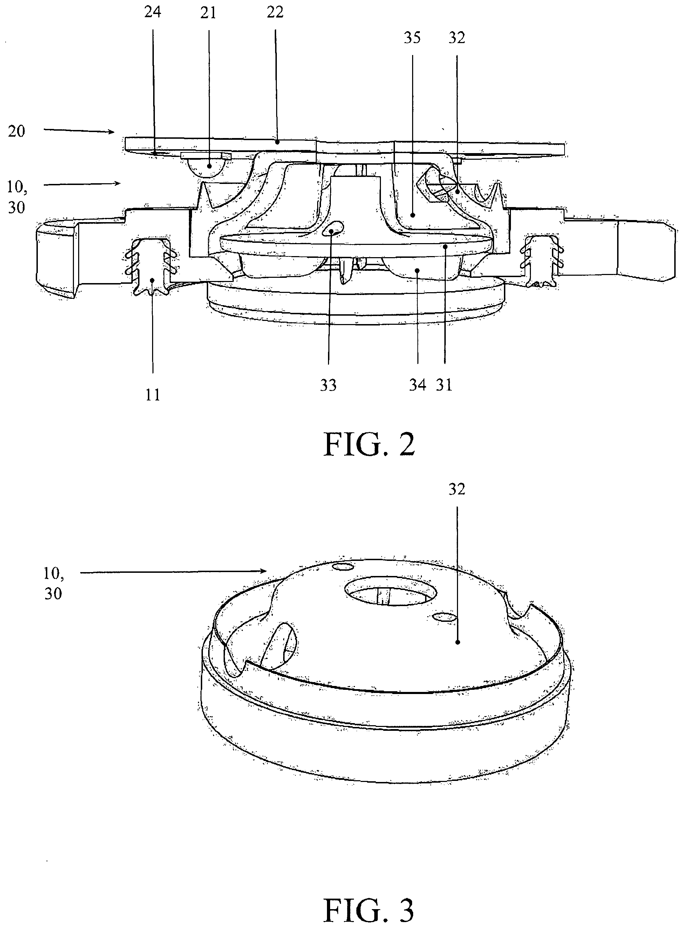

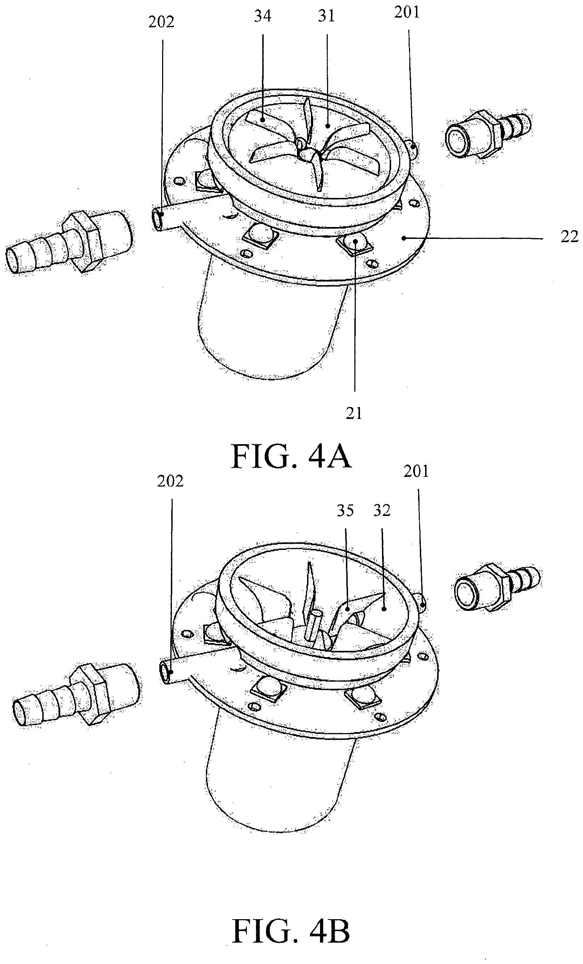

A further object is making such system by getting ideas from UV irradiation devices used for cleaning air and water.
The above and other objects and advantages of the invention, as will result from the following description, are obtained with a system for lighting and measuring the photo-catalytic activity of the reactive surface of a material, as claimed in claim 1. Preferred embodiments and non-trivial variations of the present invention are the subject matter of the dependent claims.
It will be immediately obvious that numerous variations and modifications (for example related to shape, sizes, arrangements and parts with equivalent functionality) can be made to what is described, without departing from the scope of the invention as appears from the enclosed claims.
The present invention will be better described by some preferred embodiments thereof, provided as a non-limiting example, with reference to the enclosed drawings, in which:
- Figure 1 shows a diagram of a preferred embodiment of the system for lighting and measuring the photo-catalytic activity of the reactive surface of a material according to the present invention;
- Figure 2 shows a partially sectioned perspective view along a plane to internally show the reaction chamber of the radiating system and the ventilation means of a preferred embodiment of the system according to the present invention;
- Figure 3 shows a perspective view of the reaction chamber of a preferred embodiment of the system according to the present invention;
- Figures 4A, 4B show a perspective view of the radiating system, of the ventilation means and of the reaction chamber of a preferred embodiment of the system according to the present invention;
- Figure 5 shows a perspective view of the radiating system and of the ventilation means of the system according to the present invention joined to the reactive surface of a material;
- Figure 6 shows a graph of an emitter of the radiating system, made known by its manufacturer and used in an embodiment of the system according to the present invention; and
- Figure 7 shows a graph made through a software to optimize the combination of different emitters of the type from the previous Figure.
With reference to Figures 1 and 2, it is possible to note that a system 100 for lighting and measuring the photo-catalytic activity of the reactive surface of a material comprises at least one reaction chamber 10, at least one analyzing means N of at least one gaseous fluid, at least one data saving and processing unit E, at least one radiating system 20, at least one ventilation means 30 (such as, for example, a fan supplied by current through at least one power supply A), and a piping route 1, 2, 3, 4. In accordance with the present invention, the radiating system 20 lies outside the reaction chamber 10, while the ventilation means 30 lies in the optical path of the radiating system 20 to allow reducing both the sizes of the reaction chamber 10 and the flow rate of the gaseous fluid, improving the handiness of the system 100 and the readiness and definition of the measure.
With reference to Figures 2, 3, 4A and 4B, it is possible to note that the radiating system 20 comprises a plurality of LEDs 21 arranged on an aluminum plate 22. The LEDs 21 are arranged at suitable distances with respect to the reactive surface of the material to guarantee the radiating homogeneity conditions.

The radiating system 20 comprises at least one photodiode 24 with wide spectrum to measure the reflected radiation to be able to obtain the reflectivity of the reactive surface of the material and re-calibrate the current of the LEDs 21, in order to optimize the incident radiation.

The ventilation means 30 are of transparent material with respect to the radiating system 20.

The ventilation means 30 are a turbine comprising at least one rotor 31 delimited by the reactive surface of the material. Such at least one rotor 31 is equipped with holes 33, to allow a swirling motion of the gaseous fluid coming from an inlet pipe 201, with respect to the reactive surface of the material and with radial blades 34, to drag in rotation the gaseous fluid impressing a centrifugal force.

The ventilation means 30 comprise at least one stator 32 coaxial with respect to the rotor 31. The stator 32 comprises radial blades 35 shaped in order to deviate a swirling motion of the gaseous fluid towards the center of the rotor 31 to cancel the centrifugal effect. In this way, a pressure difference is created, necessary to allow the gaseous fluid to perform several circulations passing through the holes 33, before outflowing towards an outlet pipe 202.

According to a preferred configuration, the inlet and outlet pipes 201, 202 are connected to the stator 32 and diametrically aligned.

With reference to Figures 2 and 3, it is possible to note that the reaction chamber 10 is made through the stator 32 made shaped as a bell delimited by the reactive surface of the material.

The stator 32 comprises at least one gasket 11 resisting the radiation of the radiating system 20 to allow adhering to the reactive surface of the material.

The system for lighting and measuring the photo-catalytic activity of the reactive surface of a material, of the present invention, is part of a reactor with turbulent flow for photo-catalytic pigments, which allows reaching the above objects.

The study of the efficiency of photo-catalytic coatings is currently performed through a reactor complying with the UNI 11484 standard, dealing with Photo-catalysis - Determination of the photo-catalytic activity with a method with continuous tangential flow - Reduction of nitric oxide, and with the ISO 22197-1 standard - Fine ceramics (advanced ceramics, advanced technical ceramics) - Test method for air-purification performance of semiconducting photocatalytic materials - Part 1: Removal of nitric oxide.

The system for lighting and measuring the photo-catalytic activity of a material allows:
- improving and regulating the distribution intensity of incident radiations;
- decreasing the volume of the reaction chamber in order to decrease the necessary gas flow and/or increase the frequency response of the system with consequent gas saving;
- regulating the turbulent regime inside the reaction chamber, in order to maximize the gas entering in contacts with the treated surface.

The reactor with turbulent flow for photo-catalytic pigments allows a test gas to enter from one of the two inlet and outlet pipes to reach the turbine composed of stator and rotor, the rotor facing the reactive surface to ensure the turbulent regime. The aluminum plate houses the LEDs arranged in order to guarantee the correct illumination distribution and regulate it, while along the input path, a thermos-hygrometric sensor is placed.

The radiating system is composed of monochromatic LEDs, due to the now wide availability of emission wavelengths and the easy regulation of the radiating power. The reaction chamber can be made with a wide range of sources with different wavelengths, allowing to measure the photo-catalytic activity not only in UV but also in the visible range.

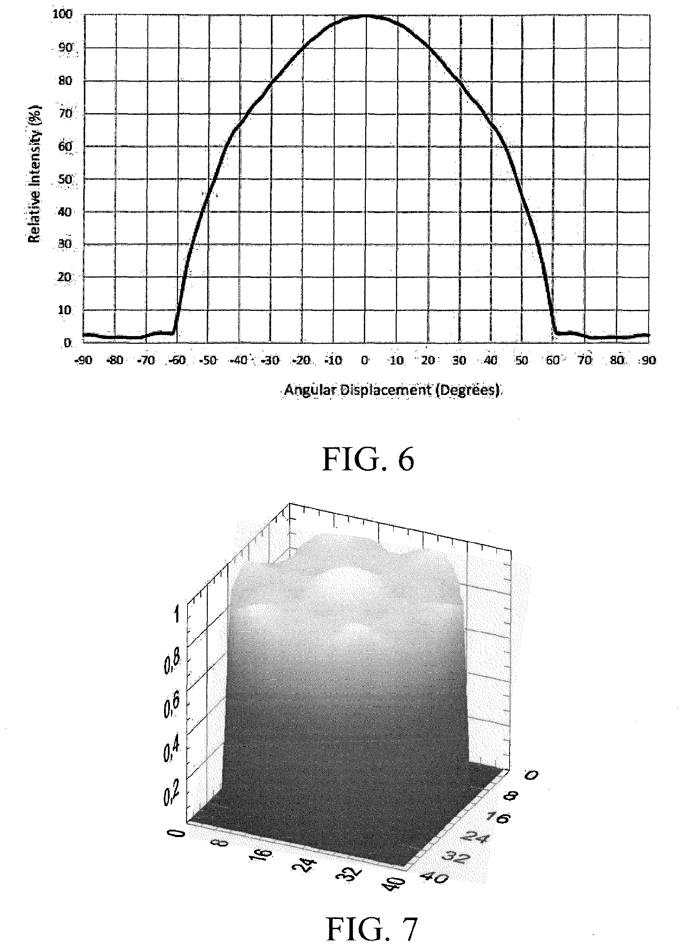

The need of guaranteeing a irradiation distribution as homogeneous as possible has brought about the development of a dedicated software for the study. Starting from the declared distribution for the single emitter, the graph of FIG. 6, made known by its manufacturer, has been converted into a polynomial function and the distribution has been modeled according to a rotation solid with axial symmetry.

Figure 7 shows the image, which shows a screen of the analysis software with optimum parameters. By observing the important cells (mean, standard deviation, efficiency), the distribution quality can be assumed on the whole surface of a screen placed at the distance set by six LEDs placed at the vertexes of an hexagon inscribed in a circumference of the set radius. The system efficiency refers to the amount of emitted radiation, which strikes the screen, mean and standard deviation referring to the whole area of the screen. The mean in particular is not very meaningful, since it is a radiation standardized to 1 and the screen area is arbitrary. In order to have more meaningful data in the case of interest, a convolution mask is placed on the image of the radiation on the screen, which represents the effect of an iris of the diameter of the surface, which will be analyzed. Obviously, due to the analysis tool, it is possible to find other interesting working points, such as radiation distribution, particularly by increasing the distance of the source, the uniformity tends to increase, even if by a few at the expense of efficiency, but, due to mechanical and yield needs, it is preferred to search the minimum distance which allows having an acceptable distribution.

The radial blades facing the reactive surface of such material to be tested allow sweeping such reactive surface, at a variable speed and at a short distance. In this way, a radial flow is created, from the central holes to the rotor periphery, with detachment of vortexes with radial axis. Such vortexes behave as rollers of an axial bearing, which move between the surface to be tested and the rotor. In this way, all gas in the chamber is quickly brought in contact with the reactive surface of the material to be tested.

According to a preferred configuration, stator and turbine are made through injection molding of a polymer, which is transparent to UV rays, the printed circuit is made of copper or aluminum in order to dissipate heat, trap and iris are coated with a highly absorbing coating derived from the thermal sun technology.

The radiation flow emitted by the LEDs directly depends on the induced current. By accurately regulating such current, it is thereby possible to determine through calibration the emitted radiation; however, the radiation pressure actually incident on the test surface is also affected by the reflectivity/absorption of all surfaces of the chamber, including the tested surface. The internal surfaces of the system have been made as absorbing as possible. The surface of the material to be testes is by its nature variable. In order to have a useful parameter to correct this variability, a photodiode with wide spectrum has been inserted, which measures the reflected radiation. From the value of this latter one, the reflectivity of the surface being used at a given time can be discovered, and the LED current can be re-calibrated, depending on a suitable table, in order to have the correct incident radiation.

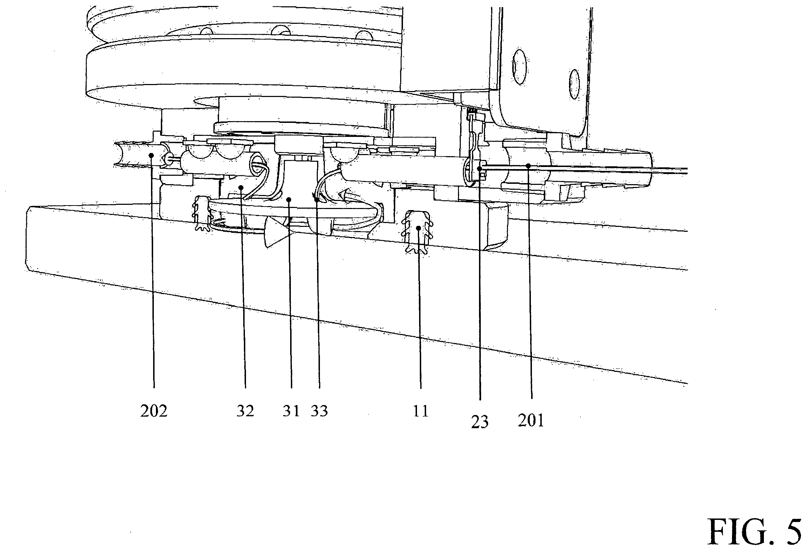

The system of the invention has a thermo-hygrometric sensor, which, according to needs, can detect physical characteristics of the gaseous fluid, before or after the treatment, since the reactor is perfectly symmetrical with respect to the gas flow direction. The arrows in Figure 5 show the internal circuits of the gaseous fluid. As soon as it enters, gas is sucked by the perforations near the rotation axis of the turbine, and is made enter in swirling contact with the reactive surface. Afterwards, it leaves the turbine through a peripheral meatus, and enters the stator, which, due to its blades, approximately separates the inlet stage from the outlet stage, further taking care of transforming the rotational kinetic energy into radial energy, setting the gas to be sucked again. Deliberately, in this first version, no preferred direction has been given to the blades of the stator, keeping them perfectly radial. This in order to slightly reduce the recirculating speed, anyway guaranteed by the centrifugal force of the turbine, compelling the gaseous fluid to be better remixed. The gasket sealing the reaction chamber is made of spongy EPDM, as guarantee of a better resistance to UV rays.

In order to get to the current design of the system of the invention, the inventors have passed from a first version extrapolated through a study to finite elements in the fluid-dynamic field. In particular, the number of Reynolds is immediately exceeded below the turbine, rising for the maximum rotation speeds, to arrive to a supersonic speed in some points. The condition below the turbine points out a central area of the cyclone with lower speed, as natural. The finite elements analysis allows determining the occurrence of a turbulent regime already with 300 revolutions per minute, namely more than one meter per second of absolute speed, deemed enough to destroy the lamina regime.

Since this is a design for a portable reactor, it is important to take into account also the contour conditions of the experimental setup. In particular, the gas consumption for the measures (related with the settling time of the chamber) is directly proportional to its volume. And thereby also the necessary time for the measure. In the image of Figure 3, it is possible to note that the shape of the internal chamber space is computed as 20 cm3.

## Claims

1. System (100) for lighting and measuring the photo-catalytic activity of the reactive surface of a material, comprising at least one reaction chamber (10), an inlet pipe (201), at least one analyzing means (N) of at least one gaseous fluid, at least one data saving and processing unit (E), at least one radiating system (20), at least one ventilation means (30), a piping route (1, 2, 3, 4), said radiating system (20) lying outside said reaction chamber (10) and said ventilation means (30) lying in the optical path of said radiating system (20), wherein said ventilation means (30) is a turbine comprising at least one rotor (31) delimited by said reactive surface of said material, **characterized by** said at least one rotor (31) being equipped with holes (33) to allow a swirling motion of said gaseous fluid coming from the inlet pipe (201), with respect to said reactive surface of said material and of radial blades (34), to drag in rotation said gaseous fluid impressing a centrifugal force.

2. System (100) according to the previous claim, **characterized in that** said radiating system (20) comprises a plurality of LEDs (21) arranged on an aluminum plate (22), said LEDs (21) being arranged at suitable distances with respect to said reactive surface of said material to guarantee radiating homogeneity conditions.

3. System (100) according to the previous claim, **characterized in that** said radiating system (20) comprises at least one photodiode (24) with wide spectrum, said photodiode (24) being adapted to measure a reflected radiation and to obtain a reflectivity of said reactive surface of said material and re-calibrate a current of said LED (21), in order to optimize the incident radiation.

4. System (100) according to any one of the previous claims, **characterized in that** said ventilation means (30) is made of transparent material with respect to said radiating system (20) .

5. System (100) according to claim 1, **characterized in that** it comprises an outlet pipe (202), wherein said ventilation means (30) comprise at least one stator (32) coaxial with respect to said rotor (31), said stator (32) comprising radial blades (35) shaped in order to deviate a swirling motion of said gaseous fluid towards the center of said rotor (31) to cancel a centrifugal effect, thereby creating a pressure difference necessary to allow said gaseous fluid to perform several circulations passing through said holes (33), before outflowing towards the outlet pipe (202) .

6. System (100) according to the previous claim, **characterized in that** said inlet and outlet pipes (201, 202) are connected to said stator (32) and diametrically aligned.

7. System (100) according to claim 5, **characterized in that** said reaction chamber (10) is made through said stator (32), said stator (32) having the shape of a bell delimited by said reactive surface of said material.

8. System (100) according to the previous claim, **characterized in that** said stator (32) comprises at least one gasket (11) resisting to the radiation of said radiating system (20) to allow adhering to said reactive surface of said material.

## Patentansprüche

1. System (100) für Beleuchtung und Messung der photokatalytischen Tätigkeit der reaktiven Materialoberfläche, welches mindestens folgendes enthält: eine Reaktionskammer (10), ein Eingangsrohr (201), wenigstens ein Analysatormittel (N) für wenigstens ein Flüssiggas, wenigstens eine Einheit (E) für Speicherung und Bearbeitung von Daten, wenigstens ein Strahlungssystem (20), wenigstens ein Belüftungssystem (30), einen Rohrverlauf (1, 2, 3, 4), wobei das besagte Strahlungssystem (20) sich außerhalb der besagten Reaktionskammer (10) befindet und das besagte Belüftungssystem (30) im optischen Verlauf des besagten Strahlungssystems (20), wobei das besagte Belüftungssystem (30) eine Turbine mit wenigstens einem Rotor (31) ist, der von der besagten Reaktionsfläche des besagten Materials begrenzt ist, **gekennzeichnet durch die Tatsache, dass** wenigstens ein Rotor (31) mit Löchern (33) versehen ist, um dem aus dem Eingangsrohr (201) kommenden Flüssiggas eine Wirbelbewegung gegenüber der besagten Reaktionsfläche des besagten Materials und der radialen Beschaufelung (34) zu verleihen und das besagte Flüssiggas durch Schleuderkraft in Rotation zu versetzen.

2. System (100) wie der vorherige Patentanspruch, **gekennzeichnet durch die Tatsache, dass** das besagte Strahlungssystem (20) mehrere LED (21) umfasst, die auf einer Aluminiumplatte (22) angeordnet sind. Diese LED (21) sind in einem geeigneten Abstand von der besagten Reaktionsoberfläche des besagten Materials angeordnet, um die Bedingung einer homogenen Strahlung zu garantieren.

3. System (100) wie der vorherige Patentanspruch, **gekennzeichnet durch die Tatsache, dass** das besagte Strahlungssystem (20) wenigstens eine Breitspektrum-Photodiode (24) umfasst. Die besagte Photodiode (24) führt die Messung einer reflektierten Strahlung, Erhalt einer Reflektierbarkeit der besagten Reaktionsoberfläche des besagten Materials und die erneute Kalibrierung des Stroms der besagten LED (21) durch, um so die einfallende Strahlung zu optimieren.

4. System (100) gemäß einem beliebigen, vorherigen Patentanspruch, **gekennzeichnet durch die Tatsache, dass** das besagte Belüftungsmittel (30) aus durchsichtigem Material gegenüber dem Strahlungssystem (20) ist.

5. System (100) wie Patentanspruch 1, **gekennzeichnet durch die Tatsache, dass** es ein Ausflussrohr (202) umfasst, in dem das besagte Belüftungsmittel (30) mindestens einen koaxialen Stator (32) gegenüber dem besagten Rotor (31) umfasst. Der besagte Stator (32) weist radiale Beschaufelung (35) auf, die so geformt ist, dass sie eine Wirbelbewegung des besagten Flüssiggases gegen das Zentrum des besagten Rotors (31) zur Neutralisierung des Schleudereffektes und damit den notwendigen Druckunterschied verursacht, damit das besagte Flüssiggas verschiedene Kreisläufe beschreibt und durch die besagten Löcher (33) fließt, bevor es am Ausgangsrohr (202) austritt.

6. System (100) wie der vorherige Patentanspruch, **gekennzeichnet durch die Tatsache, dass** die besagten Ein- und Ausgangsrohre (201, 202) mit dem besagten Stator (32) verbunden und diametral ausgerichtet sind.

7. System (100) gemäß Patentanspruch 5, **gekennzeichnet durch die Tatsache, dass** die besagte Reaktionskammer (10) mittels des besagten Stators (32) ausgeführt ist, wobei der besagte Stator (32) die Form einer Glocke hat, die durch die besagte Reaktionsoberfläche des besagten Materials begrenzt ist.

8. System (100) wie der vorherige Patentanspruch, **gekennzeichnet durch die Tatsache, dass** der besagte Stator (32) zumindest eine Dichtung (11) umfasst, die den Strahlungen des besagten Strahlungssystems (20) widersteht, um die Haftung an der besagten Reaktionsoberfläche des besagten Materials zu erlauben.

## Revendications

1. Système (100) d'éclairage et de mesure de l'activité photocatalytique de la surface réactive d'un matériau superficie, comprenant au moins une chambre de réaction (10), un tube d'entrée (201), au moins un moyen analyseur (N) d'un fluide gazeux, une unité (E) de sauvegarde et d'élaboration des données, un système d'irradiation (20), un moyen de ventilation (30), un parcours de tubulures (1, 2, 3, 4) ; le système d'irradiation (20) se trouve à l'extérieur de la chambre de réaction (10) et le moyen de ventilation (30) se trouve dans le parcours optique du système d'irradiation (20), où le moyen de ventilation (30) est une turbine comprenant au moins un rotor (31) délimité par la surface réactive du matériau, **caractérisé en ce qu'**au moins un rotor (31) est pourvu de trous (33) pour permettre un mouvement tourbillonnant du fluide gazeux provenant du tube d'entrée (201), par rapport à la surface réactive du matériau et de palettes radiales (34) pour entraîner en rotation le fluide gazeux en donnant une force centrifuge.

2. Système (100), selon la revendication précédente, **caractérisé en ce que** le système d'irradiation (20) comprend une pluralité de LED (21) positionnées sur une plaque en aluminium (22), ces LED (21) sont placées à une distance appropriée par rapport à la surface réactive du matériau pour garantir les conditions d'homogénéité d'irradiation.

3. Système (100), selon la revendication précédente, **caractérisé en ce que** le système d'irradiation (20) comprend au moins une photodiode (24) à large spectre ; la photodiode (24) permet de mesurer une irradiation réfléchie, d'obtenir une réflectivité de la surface réactive du matériau et de calibrer un courant des LED (21), afin d'optimiser l'irradiation incidente.

4. Système (100), selon l'une des revendications précédentes, **caractérisé en ce que** le moyen de ventilation (30) est en matière transparente par rapport au système d'irradiation (20).

5. Système (100), selon la revendication 1, **caractérisé en ce qu'**il comprend un tube de sortie (202), où le moyen de ventilation (30) comprend au moins un stator (32) coaxial par rapport au rotor (31) ; le stator (32) possède des palettes radiales (35) constituées de sorte à dévier un mouvement tourbillonnant du fluide gazeux vers le centre du rotor (31) pour neutraliser l'effet centrifuge, en créant ainsi une différence de pression nécessaire pour permettre au fluide gazeux d'effectuer plusieurs circulations en passant à travers les trous (33), avant de s'écouler vers le tube de sortie (202).

6. Système (100), selon la revendication précédente, **caractérisé en ce que** les tubes d'entrée et de sortie (201, 202) sont reliés au stator (32) et sont alignés diamétralement.

7. Système (100), selon la revendication 5, **caractérisé en ce que** la chambre de réaction (10) est réalisée à travers le stator (32) qui est en forme de cloche délimitée par la surface réactive du matériau.

8. Système (100), selon la revendication précédente, **caractérisé en ce que** le stator (32) comprend au moins un joint (11) résistant à la radiation du système d'irradiation (20) pour pouvoir adhérer à la surface réactive du matériau.
